# EUROPEAN PATENT APPLICATION

(11) **EP 4 492 494 A1**
(43) Date of publication of application: **15.01.2025**
(21) Application number: 23818218.2
(22) Date of filing: 24.08.2023
(51) Int. Cl.: H01M 4/36, H01M 10/0525

(54) **COATED POSITIVE ELECTRODE MATERIAL AND PREPARATION METHOD THEREFOR, COATING PROCESSING SYSTEM FOR POSITIVE ELECTRODE MATERIAL, AND SECONDARY BATTERY**

(30) Priority: 29.05.2023 CN 202310611540
(71) Applicant: Chengdu B & M Science and Technology Co., Ltd., Chengdu, Sichuan 610404 (CN)
(72) Inventor: LI, Zhengyu, Chengdu, Sichuan 610404 (CN); WU, Mengtao, Chengdu, Sichuan 610404 (CN); XU, Ning, Chengdu, Sichuan 610404 (CN); LV, Fei, Chengdu, Sichuan 610404 (CN); CHENG, Xiaokun, Chengdu, Sichuan 610404 (CN)
(74) Representative: Ström & Gulliksson AB
(86) International application number: PCT/CN2023/114665
(87) International publication number: WO 2024/244174

(57) **Abstract**

The present disclosure provides a coated cathode material and a preparation method therefor, a coating treatment system for the cathode material, and a secondary battery. The coated cathode material comprises a cathode material bulk and a nano-coating layer coated on the surface of the cathode material bulk. The nano-coating layer comprises a coating element. A theoretical content value of the coating element in the coated cathode material is m wt%. A average value of actual contents of the coating element measured at multiple different positions in the coated cathode material is m' wt%, wherein Δm=|m-m'|, and 0<|Δm|≤0.02%. The coated cathode material provided by the present disclosure can achieve uniform distribution of the coating element in the coated cathode material, so that the nano-coating layer has relatively a higher uniformity and continuity.

## Description

This application claims priority to Chinese Patent Application No. 202310611540.2, titled "COATED CATHODE MATERIAL AND PREPARATION METHOD THEREFOR, COATING TREATMENT SYSTEM FOR CATHODE MATERIAL AND SECONDARY BATTERY", filed on May 29, 2023 with the China National Intellectual Property Administration, which is incorporated herein by reference in its entirety.

### FIELD

The present disclosure relates to the field of electrochemistry technology and in particular to a coated cathode material and a preparation method therefor, a coating treatment system for cathode material and a secondary battery.

### BACKGROUND

With development requirements of new energy vehicles, the research and development of cathode materials with high capacity, long life, low cost, safety and environmental protection is particularly urgent. Current commercial cathode materials for lithium battery mainly include lithium cobaltate with a layered structure, ternary material, lithium manganate with a spinel structure and lithium iron phosphate with an olivine structure. Different types of cathode materials have different advantages and disadvantages, and usually need to be modified and improved by means of doping or coating to meet requirements of actual use. Among them, the main function of the coating is to serve as a protective layer to isolate a direct contact between an electrolyte and an active electrode material, and reduce an occurrence of side reactions, such as reducing the precipitation of transition metals, forming a thinner SEI film, reducing the precipitation of oxygen atoms, and the like, thereby improving electrochemical stability.

However, in the current conventional coating treatment, the synthesis method of rough coating (dry method or wet method) is mainly used to modify the cathode active materials. Although this method is simple and low-cost, the coating layer usually has problems of being uneven and discontinuous, causing the fact that part of the surface of the active material is still exposed to the electrolyte, thereby affecting the electrochemical performance of the battery.

### SUMMARY

Based on this, the present disclosure provides a coated cathode material and preparation method therefore, a coating treatment system for the cathode material, and a secondary battery to improve the uniformity and continuity of a coating layer.

A first aspect of the present disclosure provides a coated cathode material, comprising: a cathode material bulk and a nano-coating layer coated on the surface of the cathode material bulk, wherein the nano-coating layer comprises a coating element, a theoretical content value of the coating element in the coated cathode material is m wt%, and an average value of actual contents of the coating element measured at multiple different positions in the coated cathode material is m' wt%, wherein Δm=|m-m'|, and 0<Δm≤0.02%.

In some embodiments of the present disclosure, the coated cathode material meets at least one of following conditions:
(1) the coating element comprises one or more of Ti, Mg, Al, Zr, Y, Mo, Nb and B;
(2) the cathode material bulk comprises lithium nickel cobalt manganese oxide Li_{w}Ni_{1-x-y}CoₓMn_{y}O₂, 0.95≤w≤1.05, 0≤x≤1, 0≤y≤1;
(3) an average particle size of the coated cathode material is 2 µm to 20 µm;
(4) an average thickness of the nano-coating layer is 5nm to 30nm.

A second aspect of the present disclosure provides a method for preparing a coated cathode material, comprising:
performing a spray treatment on a suspension containing a coating substance, to form nano-spray droplets of the coating substance, so that the nano-spray droplets are in contact with the cathode material bulk in a rolling state and attached to a surface of the cathode material bulk, to obtain a crude coating product; and
performing a calcination treatment on the crude coating product, to form a nano-coating layer on the surface of the cathode material bulk, to obtain the coated cathode material.

In some embodiments of the present disclosure, the three-dimensional mixer meets at least one of following conditions:
(1) the rolling has a speed of 4rpm to 10rpm.
(2) a mass ratio of the coating element in the coating substance to the cathode material bulk is 600ppm to 3000ppm.

In some embodiments of the present disclosure, the spray treatment satisfies at least one of following conditions:
(1) the spray treatment is performed at a temperature of 35 °C to 65 °C;
(2) the spray treatment is performed at a spray pressure of 0.15 MPa to 0.30 MPa;
(3) the spray treatment is a multi-point uniform spray treatment, optionally, the spray treatment is performed at a spray rate of 0.1 kg/min to 0.3 kg/min.

In some embodiments of the present disclosure, the calcination treatment satisfies at least one of following conditions:
(1) the calcination treatment is performed at a temperature of 250 °C to 750 °C;
(2) the calcination treatment is performed for a duration of 8 h to 16 h;
(3) the calcination treatment is performed under a protective atmosphere, optionally, the protective atmosphere comprises one or more of nitrogen gas, argon gas, helium gas and neon gas.

In some embodiments of the present disclosure, the suspension containing the coating substance is prepared by the steps comprising:
mixing the coating substance with an organic solvent to obtain the suspension containing the coating substance, optionally, a mass ratio of the coating element in the coating substance to the organic solvent is (6 to 12 ): 100.

In some embodiments of the present disclosure, the method satisfies at least one of following conditions:
(1) the coating substance comprises one or more oxygen-containing compounds of Ti, Mg, Al, Zr, Y, Mo, Nb and B;
(2) the organic solvent comprises one or more of alcohol and amide organic solvents, optionally, the organic solvent comprises one or more of ethanol, methanol and N,N-dimethylformamide.

A third aspect of the present disclosure provides a coating treatment system for cathode materials, comprising:
a three-dimensional mixer, configured for preforming a spray and mixing treatment on a coating substance and a cathode material bulk, so that the coating substance is attached to a surface of the cathode material bulk;
a pyrolysis equipment, configured to be connected to the three-dimensional mixer and used to perform a calcination treatment on the product after the spray and mixing treatment, to form a nano-coating layer on the surface of the cathode material bulk.

In some embodiments of the present disclosure, the coating treatment system satisfies at least one of following conditions:
(1) the three-dimensional mixer is provided with a spray channel along a central axis, and at least one spray outlet is provided on a wall of the spray channel;
(2) the pyrolysis equipment comprises a pyrolysis furnace or a pyrolysis kiln.

A fourth aspect of the present disclosure provides a secondary battery, comprising the coated cathode material described in the first aspect of the present disclosure or the coated cathode material prepared by the preparation method described in the second aspect of the present disclosure.

A fifth aspect of the present disclosure provides an electrical device, comprising the secondary battery described in the fourth aspect of the present disclosure.

The electrical device of the present disclosure comprises the secondary battery provided by the present disclosure, and thus has at least the same advantages as the secondary battery.

For the coated cathode material according to the present disclosure, the difference Δm between the theoretical content value m wt% of the coating element in the nano-coating layer and the average value m' wt% of the actual content measured at multiple different positions is within the above range, which can achieve uniform distribution of the coating element in the coated cathode material, thereby making the nano-coating layer have relatively higher uniformity and continuity.

In addition, compared with conventional rough coating (dry method or wet method), in the preparation method provided in the present disclosure, nanometerized spray droplets of the coating substance can be formed by performing a spray treatment on the suspension containing the coating substance; at the same time, the cathode material bulk in the rolling state is also rotating continuously at a constant speed, so that the spray droplets can evenly scatter and be attached to the surface of the cathode material bulk, thereby greatly improving the uniformity and consistency of the coating substance on the surface of the cathode material bulk. In addition, the cathode material bulk in the rolling state can also be rolled and mixed with the coating substance, thereby effectively avoiding problems of material adhesion and wall sticking during the wet coating process. The preparation method provided by the present disclosure has simple process, short reaction time, continuous reaction, large processing capacity, uniform distribution of the coating element, and can produce coated cathode materials at a lower cost.

### BRIEF DESCRIPTION OF THE DRAWINGS

Figure 1 is a comparison chart of a laser particle size distribution of coated lithium nickel cobalt manganese oxide of Example 1 and Comparative Example 1;
Figure 2 is a schematic diagram of an overall equipment for preparing the coated lithium nickel cobalt manganese oxide in the present disclosure;
Figure 3 is an SEM comparison diagram of the coated lithium nickel cobalt manganese oxide of Example 1 (a) and Comparative Example 1 (b).

### DETAILED DESCRIPTION OF EMBODIMENTS

In order to facilitate understanding of the present disclosure, the present disclosure will be described more thoroughly below with reference to relevant drawings. The preferred examples of the present disclosure are shown in accompanying drawings. However, the present disclosure can be implemented in many different forms and is not limited to the examples described herein. Rather, these examples are provided so that a thorough understanding of the disclosure of the present disclosure will be provided.

For simplicity, only certain numerical ranges are explicitly disclosed herein. However, any lower limit can be combined with any upper limit to form a range not explicitly stated; and any lower limit can be combined with other lower limits to form a range not explicitly stated, and likewise any upper limit can be combined with any other upper limit to form a range not explicitly stated. In addition, although not explicitly stated, every point or individual value between the endpoints of a range is comprised in the range. Thus, each point or single value can serve as a lower or upper limit on its own in combination with any other point or single value or with other lower or upper limit to form a range not explicitly stated.

Unless otherwise defined, all technical and scientific terms herein have the same meaning as commonly understood by one of ordinary skill in the technical field to which the present disclosure belongs. The terminology used herein in the description of the present disclosure is for the purpose of describing specific examples only and is not intended to limit the present disclosure. It should be noted that, unless otherwise stated, the term "and/or" used herein comprises any and all combinations of one or more related listed items, and "above" and "below" are inclusive of this number, the "more" in "one or more" means two or more.

The above summary of the present disclosure is not intended to describe each disclosed embodiment or every implementation mode in the present disclosure. The following description illustrates exemplary embodiments in more detail. At various points throughout the present disclosure, guidance is provided through a series of examples, which may be used in various combinations. In each instance, the enumerations are representative only and should not be construed as exhaustive.

A first aspect of the present disclosure provides a coated cathode material, comprising a cathode material bulk and a nano-coating layer coated on the surface of the cathode material bulk. The nano-coating layer comprises a coating element, and a theoretical content value of the coating element in the coated cathode material is m wt%, and an average value of actual contents of the coating element measured at multiple different positions of the coated cathode material is m' wt%, wherein Δm=|m-m'|, and 0<|Δm|≤0.02%.

It should be noted that the theoretical content value m wt% of the coating element in the coated cathode material can be determined by a feeding amount. The average value m' wt% of the actual content of the coating element measured at multiple different positions in the coated cathode material can be determined by sampling and testing at multiple different positions of the coated cathode material, measuring the actual content value of the coating elements in the coated cathode material at each position by element trace analysis method (such as EDS energy spectrometer), and calculating the average of each actual content value.

It can be understood that the above-mentioned multiple different position points comprise at least three different position points.

For the coated cathode material according to the present disclosure, the difference Δm between the theoretical content value m wt% of the coating element in the nano-coating layer and the average value m' wt% of the actual content is within the above range, which can achieve uniform distribution of the coating element in the coated cathode material, thereby making the nano-coating layer have relatively higher uniformity and continuity.

In some embodiments, the coating element comprises one or more of Ti, Mg, Al, Zr, Y, Mo, Nb, and B.

In some embodiments, the cathode material bulk comprises lithium nickel cobalt manganese oxide Li_{w}Ni_{1-x-y}CoₓMn_{y}O₂, 0.95≤w≤1.05, 0≤x≤1, 0≤y≤1. It can be understood that the cathode material bulk also includes lithium nickel cobalt aluminum oxide, lithium cobaltate, lithium-rich manganese-based cathode materials, and the like.

In some embodiments, an average particle size of the coated cathode material is 2 µm to 20 µm. For example, the average particle size can be 2 µm, 5 µm, 8 µm, 11 µm, 14 µm, 17 µm, 20 µm or within a range of any of the above values.

The average particle size of the coated cathode material has a meaning known in the art and can be measured using instruments and methods known in the art. For example, it can be measured conveniently by GB/T 19077-2016 particle size distribution laser diffraction method using a laser particle size analyzer, such as the Mastersizer 2000E laser particle size analyzer of Malvern Instruments Co., Ltd. in the United Kingdom.

In some embodiments, an average thickness of the nano-coating layer is 5 nm to 30 nm. For example, the average thickness of the nano-coating layer can be 5 nm, 10 nm, 15 nm, 20 nm and 30 nm.

The average thickness of the nano-coating layer is determined by obtaining an equivalent thickness, directly observing the nano-coating layer from TEM images, and confirming that a magnitude of the previously obtained equivalent thickness is an appropriate value, wherein the equivalent thickness is obtained by taking into account the composition of the nano-coating layer obtained by composition analysis (TEM-EDX: Transmission Electron Microscopy-Energy Dispersive X-ray Spectroscopy) and amounts of the elements obtained by Inductively Coupled Plasma Mass Spectrometry (ICP-MS).

A second aspect of the present disclosure provides a method for preparing a coated cathode material, which can be used to prepare the coated cathode material described in the first aspect of the present disclosure, which can comprise the following steps:
S10, performing a spray treatment on a suspension containing a coating substance, to form nano-spray droplets of the coating substance, so that the nano-spray droplets are in contact with a cathode material bulk in a rolling state and attached to a surface of the cathode material bulk to obtain a crude coating product; and
S20, performing a calcination treatment on the crude coating product, to form a nano-coating layer on the surface of the cathode material bulk to obtain the coated cathode material.

Compared with conventional rough coating (dry method or wet method), in the preparation method provided in the present disclosure, nanometerized spray droplets of the coating substance can be formed by performing a spray treatment on the suspension containing the coating substance; at the same time, the cathode material bulk in the rolling state is also rotating continuously at a constant speed, so that the spray droplets can evenly scatter and be attached to the surface of the cathode material bulk, thereby greatly improving the uniformity and consistency of the coating substance on the surface of the cathode material bulk. In addition, the cathode material bulk in the rolling state can also be rolled and mixed with the coating substance, thereby effectively avoiding problems of material adhesion and wall sticking during the wet coating process. The preparation method provided by the present disclosure has simple process, short reaction time, continuous reaction, large processing capacity, uniform distribution of the coating element, and can produce coated cathode materials at a lower cost.

A third aspect of the present disclosure provides a coating treatment system for the cathode material, in which the coated cathode material described in the first aspect of the present disclosure can be prepared using the preparation method described in the second aspect of the present disclosure.

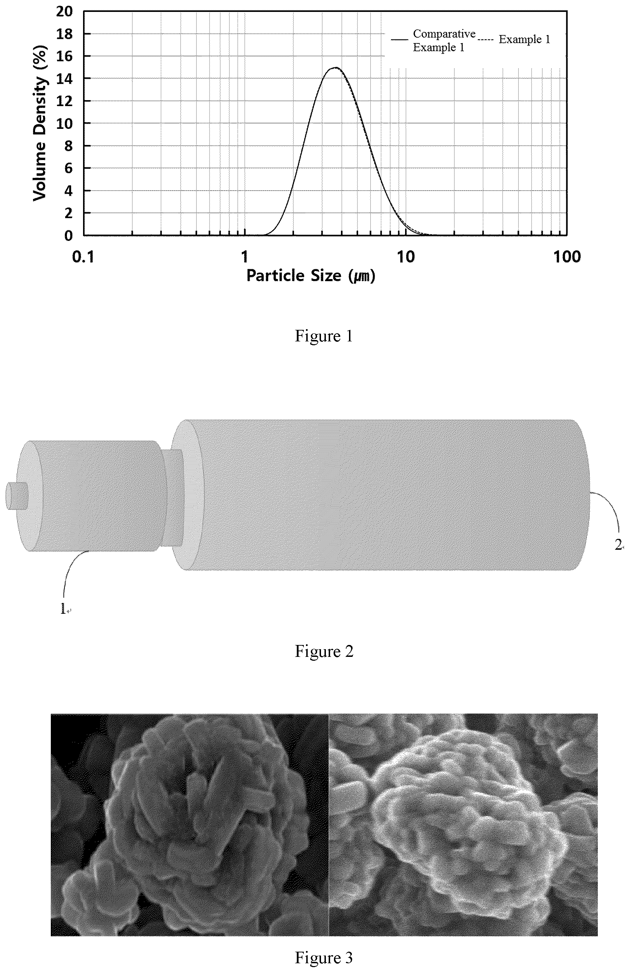

In some embodiments, as shown in Figure 2, the coating processing system comprises: a three-dimensional mixer 1, configured for preforming a spray and mixing treatment on a coating substance and a cathode material bulk, so that the coating substance is attached to a surface of the cathode material bulk; a pyrolysis equipment 2, configured to be connected to the three-dimensional mixer and used to perform a calcination treatment on the product after the spray and mixing treatment, to form a nano-coating layer on the surface of the cathode material bulk.

In some embodiments, the spray treatment is performed in the three-dimensional mixer 1 and the calcination treatment is performed in the pyrolysis equipment 2.

Since the three-dimensional mixer 1 is connected to the pyrolysis equipment 2 for calcination treatment, after obtaining a crude coating product, the crude coating product can be transferred to the pyrolysis equipment 2. That is, during the process of transferring from the mixing process to the pyrolysis process, the crude coating product does not need to be in contact with the external environment, so that the coating reaction can be carried out continuously, thereby reducing problems such as contamination, loss, and performance variation that may be caused by contacting the materials with the external environment when the materials are transferred between discontinuous processes in the conventional rough coating methods.

In some embodiments, as shown in Figure 2, the three-dimensional mixer 1 in the present disclosure is connected to the pyrolysis equipment 2. The three-dimensional mixer 1 can roll or rotate along a central axis. A spray channel is provided along the central axis. After the cathode material bulk is added to the three-dimensional mixer, it will rotate with the rolling of the three-dimensional mixer 1. After the suspension containing the coating substance is passed into the three-dimensional mixer 1 along the spray channel, the suspension can be subjected to spray treatment under high pressure to form nano-spray droplets of the coating substance. Then, the nano-spray droplets can be attached to the surface of the continuously rotating cathode material bulk. As the cathode material bulk rotates, the nano-spray droplets can be evenly scattered on the surface thereof, thereby achieving uniform and continuous coating of the surface. Subsequently, the cathode material bulk with nano-spray droplets evenly attached to the surface is transferred to the pyrolysis equipment for calcination treatment. After calcination, a continuous and uniform coating layer is formed on the surface of the cathode material bulk, to obtain the final coated cathode material product. As the three-dimensional mixer 1 is connected to the pyrolysis equipment 2, the above-mentioned overall mixing, coating and calcination processes can be carried out continuously, which can effectively reduce or avoid problems such as pollution, loss, and performance variation that may be caused by contacting the materials with the external environment when the materials are transferred between discontinuous processes in the conventional rough coating method.

In some embodiments, the three-dimensional mixer described in the present disclosure can be a conventional three-dimensional mixer, which is provided with a spray channel for the spray treatment along the central axis, and the spray channel with high pressure is provided with multiple spray outlets on a wall of the spray channel, so that the spray channel can be used as a spray point to perform multi-point uniform spray treatment.

In some embodiments, the pyrolysis equipment 2 includes a pyrolysis furnace or a pyrolysis kiln.

It can be understood that the pyrolysis furnace or pyrolysis kiln described in the present disclosure can be a conventional pyrolysis furnace or pyrolysis kiln, which is connected to the aforementioned three-dimensional mixer 1 to achieve continuous coating of the lithium cathode material bulk.

In some embodiments, the rolling has a speed of 4 rpm to 10 rpm. For example, the rolling has a speed of 4 rpm, 5 rpm, 6 rpm, 7 rpm, 8 rpm, 9 rpm, 10 rpm or within the range of any of the above values. The speed of the rolling of the three-dimensional mixer is within a suitable range, which is conducive to the nano-spray droplets of the coating substance being more evenly attached to the surface of the cathode material bulk.

In some embodiments, a mass ratio of the coating element in the coating substance to the cathode material bulk is 600 ppm to 3000 ppm. For example, the mass ratio of the coating element in the coating substance to the cathode material bulk can be 1000 ppm, 1500 ppm, 2000 ppm, 2500 ppm or within the range of any of the above values.

It can be understood that, for example, when the coating substance is Al(OH)₃, it refers to the mass ratio of the coating element Al element to the cathode material bulk.

It can be understood that the mass ratio of the coating elements in the above-mentioned coating substance to the cathode material bulk is measured in ppm, which means that 1 kg of the cathode material bulk contains 1 mg of the coating element. For example, when the coating substance is Al(OH)₃, it means that 1 kg of the cathode material bulk contains 1 mg of the coating element Al element.

In some embodiments, the spray treatment is a multi-point uniform spray treatment.

In some embodiments, the spray treatment is performed at a temperature of 35 °C to 65 °C. For example, the temperature of the three-dimensional mixer can be 40 °C, 45 °C, 50 °C, 55 °C, 60 °C, 65 °C or within the range of any of the above values.

In some embodiments, the spray treatment is performed at a spray pressure of 0.15 MPa to 0.30 MPa. For example, the spray treatment can be performed at a spray pressure of 0.18 MPa, 0.21 MPa, 0.24 MPa, 0.27 MPa or within the range of any of the above values.

Controlling the spray pressure within an appropriate range is conducive to the formation of nano-scale spray droplets from the spray material. In the process, the nano-spray droplets are more uniformly combined with the material particles. After low-temperature calcination, the coating element can be more uniformly and tightly integrated with the material particles, thereby being more conducive to ion conduction during the charging and discharging process and improving the electrical performance of the material.

In some embodiments, the spray treatment is performed at a spray rate of 0.1 kg/min to 0.3 kg/min. For example, the spray treatment can be performed at a spray rate of 0.1 kg/min, 0.2 kg/min, 0.3 kg/min or within the range of any of the above values. The spray rate is within a suitable range, which is conducive to the nano-spray droplets of the coating substance being more uniformly dispersed on the surface of the cathode material bulk.

In some embodiments, the calcination treatment is performed at a temperature of 250 °C to 750 °C. For example, the calcination treatment can be performed at a temperature of 300 °C, 350 °C, 400 °C, 450 °C, 500 °C, 550 °C, 600 °C, 650 °C, 700 °C or within the range of any of the above values.

In some embodiments, the calcination treatment is performed for a duration of 8 h to 16 h. For example, the calcination treatment can be performed for a duration of 8 h, 10 h, 12 h, 14 h, 16 h or within the range of any of the above values.

In some embodiments, the calcination treatment is performed under a protective atmosphere.

In some embodiments, the protective atmosphere comprises, but is not limited to, one or more of nitrogen gas, argon gas, helium gas, and neon gas.

In some embodiments of the present disclosure, the preparation method can further comprise the following step S30 of preparing the suspension containing the coating substance:
S30, mixing the coating substance and an organic solvent, to obtain a suspension containing the coating substance.

In some embodiments, a mass ratio of the coating element in the coating substance to the organic solvent is (6-12):100. For example, the mass ratio of the coating element in the coating substance to the organic solvent can be 7:100, 8:100, 9:100, 10:100, 11:100 or within the range of any of the above values.

In the present disclosure, the type of coating substance is not particularly limited, and conventional coating substances in this field can be used. For example, the coating substance comprises one or more oxygen-containing compounds of elements such as Ti, Mg, Al, Zr, Y, Mo, Nb, and B.

It can be understood that the oxygen-containing compounds of elements such as Ti, Mg, Al, Zr, Y, Mo, Nb and B refer to compounds containing any of the above elements as well as oxygen.

Optionally, the coating substance can be one or more of the acidic oxides of the elements such as Ti, Mg, Al, Zr, Y, Mo, Nb and B, or can be one or more alkaline oxides of the elements such as Ti, Mg, Al, Zr, Y, Mo, Nb and B.

In the present disclosure, the type of the organic solvent is not particularly limited, and conventional organic solvents in this field can be used. For example, the organic solvent comprises one or more of alcohol organic solvents and amide organic solvents. Optionally, the organic solvent comprises one or more of ethanol, methanol and N,N-dimethylformamide.

In some embodiments, after obtaining the coated cathode material in step S30, the preparation method can further comprise the following step S40:
S40, screening the coated cathode material, to obtain a finished product.

A fourth aspect of the present disclosure provides a secondary battery, comprising the coated cathode material described in the first aspect of the present disclosure or the coated cathode material prepared by the preparation method described in the second aspect of the present disclosure.

In some embodiments, the secondary battery can include a lithium-ion secondary battery.

In some embodiments, the secondary battery comprises a positive electrode plate, a negative electrode plate, an electrolyte, and a separator. During the charging and discharging process of the battery, active ions are inserted and detached back and forth between the positive electrode plate and negative electrode plate. The electrolyte plays a role in conducting ions between the positive electrode plate and negative electrode plate. The separator is arranged between the positive electrode plate and the negative electrode plate, and it mainly plays a role in preventing the positive electrode and negative electrode from short-circuiting and at the same time it allows ions to pass through.

A fifth aspect of the present disclosure provides an electrical device, comprising the secondary battery described in the fourth aspect of the present disclosure, wherein the secondary battery can be used as a power source in the electrical device.

In some embodiments, the type of electrical device is not particularly limited and can be any electronic device used and known in the art. For example, the electronic device can includes, but is not limited to, notebook computer, pen computer, mobile computer, e-book player, portable telephone, portable fax machine, portable copier, portable printer, stereo headset, video recorder, LCD television, portable cleaner, portable CD player, mini CD, transceiver, electronic notepad, calculator, memory card, portable recorder, radio, backup power supply, motor, car, motorcycle, power-assisted bicycle, bicycle, lighting equipment, toy, game console, clock, power tool, flashlight, camera, large household battery and lithium-ion capacitor, and the like.

### Examples

The specific examples are as follows. The content disclosed in the present disclosure was more specifically described in the following examples. These examples were only used for illustrative purposes, because it was apparent for those skilled in the art to make various modifications and changes within the scope of the disclosure of the present disclosure. Unless otherwise stated, all parts, percentages, and ratios reported in the following examples were based on weight, and all reagents used in the examples were commercially available or can be synthesized according to conventional methods, and can be directly used without further processing, and the equipment used in the examples was commercially available.

### Example 1

380 g of Al(OH)₃ powder was dissolved into 1.6 kg of ethanol and stirred for 30 minutes at room temperature to form a suspension. 100 kg of lithium nickel cobalt manganese oxide was placed in a 200 L of three-dimensional mixer, and rotated at a constant speed of 6rpm/min. The mixer was kept at a temperature of 45 °C. The Al(OH)₃ suspension was sprayed at multiple points at a uniform speed with the central axis of the three-dimensional mixer as the spray point at a pressure of 0.2 MPa and a speed of 0.16 kg/min. After the spray was completed, the material was transferred to a pyrolysis equipment in which the temperature was set to 450 °C and kept at this temperature for 14 hours, and then cooled and passed through a 400-mesh sieve, to obtain the finished product.

### Example 2

540g of TiOSO₄ powder was dissolved into 2 kg of methanol and stirred at room temperature for 20 minutes to form a suspension. 100 kg of lithium nickel cobalt manganese oxide was placed in a 200L of three-dimensional mixer, and rotated at a constant speed of 8 rpm/min. The mixer temperature was kept at 50 °C. The TiOSO₄ suspension was sprayed at multiple points at a uniform speed with the central axis of the three-dimensional mixer as the spray point at a pressure of 0.25 MPa and a speed of 0.2 kg/min. After the spray was completed, the material was transferred to the pyrolysis equipment in which the temperature was set to 650 °C and kept at this temperature for 16 hours, and then cooled and passed through the 400-mesh sieve, to obtain the finished product.

### Comparative Example 1

Comparative Example 1 was a conventional dry coating method, which was specifically as bellows. 760 g of Al(OH)₃ powder and 200 kg of lithium nickel cobalt manganese oxide were placed in a 500 L high-speed mixer and mixed at 380 rpm/min for 20 minutes. After the mixing was completed, the materials went through the feeding bin and the saggar-loading machine, and then entered the roller kiln, in which the materials were kept at 450 °C for 14 hours in the constant temperature zone, and then cooled, and passed through the 400-mesh sieve, to obtain the finished product.

### Comparative Example 2

Comparative Example 2 was a conventional dry coating method, which was specifically as bellows. 1080g of TiOSO₄ powder and 200 kg of lithium nickel cobalt manganese oxide were placed in a 500 L high-speed mixer and mixed at 380 rpm/min for 20 minutes. After the mixing was completed, the materials went through the feeding bin and the saggar-loading machine, and then entered the roller kiln, in which the materials were kept at 650 °C for 16 hours in a constant temperature zone, and then cooled, and passed through the 400-mesh sieve, to obtain the finished product.

The coated lithium nickel cobalt manganese oxides prepared in Examples 1 to 2 and Comparative Examples 1 to 2 were subjected to relevant performance tests, and the test results were shown in Table 1 below. In addition, the coated lithium nickel cobalt manganese oxide was prepared into a sample of pole piece. A scanning electron microscope (SEM) and an energy spectrometer (EDS) were used for testing. The focused electron beam of the instrument was used to excite the surface of the sample to generate secondary information such as secondary electrons, backscattered electrons and characteristic X-rays. The secondary information was collected and detected for the analysis of the microscopic morphology and micro-area composition of the sample surface.

**Table 1**

| | Coating element | Theoretical value (%) | Multi-point sampling detection value(wt%) | | | | | Average value (wt%) |
|---|---|---|---|---|---|---|---|---|
| | | | 1 | 2 | 3 | 4 | 5 | |
| Example 1 | Al | 0.13 | 0.13 | 0.12 | 0.12 | 0.14 | 0.15 | 0.132 |
| Comparative Example 1 | | 0.13 | 0.15 | 0.18 | 0.14 | 0.15 | 0.16 | 0.156 |
| Example 2 | Ti | 0.16 | 0.13 | 0.17 | 0.12 | 0.15 | 0.15 | 0.144 |
| Comparative Example 2 | | 0.16 | 0.11 | 0.15 | 0.12 | 0.13 | 0.16 | 0.134 |

It can be seen from the above Table 1 that the average value of the actual contents of the multi-point detection of the coating element in the examples was closer to the theoretical value, indicating that compared with the traditional dry coating method, the coated lithium nickel cobalt manganese oxide prepared by the method of the present disclosure had a stronger combination between the coating element and the material particles, which were less likely to fall off during the subsequent processes. At the same time, as can be seen from the above Table 1, Figure 1 and Figure 3, when the particle sizes of the samples in Example 1 and Comparative Example 1 were basically the same, the difference among the multi-point test data in Example 1 was smaller, indicating that the coating was more uniform.

Each of the technical features in the above-described examples can be combined in any way. To simplify the description, not all possible combinations of each of the technical features in the above-described examples are described. However, as long as there is no contradiction in the combination of these technical features, all should be considered to be within the scope of the specification.

The above-described examples only express several embodiments of the present disclosure, and their descriptions are relatively specific and detailed, but they should not be construed as limiting the scope of the present disclosure. It should be noted that, for those of ordinary skill in the art, several modifications and improvements can be made without departing from the concept of the present disclosure, and these all fall within the protection scope of the present disclosure. Therefore, the scope of protection of the present disclosure should be determined by the appended claims.

## Claims

1. A coated cathode material, comprising:
a cathode material bulk; and
a nano-coating layer coated on the surface of the cathode material bulk, wherein the nano-coating layer comprises a coating element, a theoretical content value of the coating element in the coated cathode material is m wt%, and an average value of actual contents of the coating element measured at multiple different positions in the coated cathode material is m' wt%, wherein 4 m=|m-m'|, and 0<Δm≤0.02%.

2. The coated cathode material according to claim 1, wherein the coated cathode material meets at least one of following conditions:
(1) the coating element comprises one or more of Ti, Mg, Al, Zr, Y, Mo, Nb and B;
(2) the cathode material bulk comprises lithium nickel cobalt manganese oxide Li_{w}Ni_{1-x-y}CoₓMn_{y}O₂, 0.95≤w≤1.05, 0≤x≤1, 0≤y≤1;
(3) an average particle size of the coated cathode material is 2 µm to 20 µm; and
(4) an average thickness of the nano-coating layer is 5nm to 30nm.

3. A method for preparing the coated cathode material according to claim 1 or 2, comprising:
performing a spray treatment on a suspension containing a coating substance, to form nano-spray droplets of the coating substance, so that the nano-spray droplets are in contact with a cathode material bulk in a rolling state and attached to a surface of the cathode material bulk to obtain a crude coating product; and
performing a calcination treatment on the crude coating product, to form a nano-coating layer on the surface of the cathode material bulk to obtain the coated cathode material.

4. The method according to claim 3, wherein the method meets at least one of following conditions:
(1) the rolling has a speed of 4 rpm to 10 rpm; and
(2) a mass ratio of the coating element in the coating substance to the cathode material bulk is 600 ppm to 3000 ppm.

5. The method according to claim 3 or 4, wherein the spray treatment satisfies at least one of following conditions:
(1) the spray treatment is performed at a temperature of 35 °C to 65 °C;
(2) the spray treatment is performed at a spray pressure of 0.15 MPa to 0.30 MPa;
(3) the spray treatment is a multi-point uniform spray treatment; optionally, the spray treatment is performed at a spray rate of 0.1 kg/min to 0.3 kg/min.

6. The method according to claim 3 or 4, wherein the calcination treatment satisfies at least one of following conditions:
(1) the calcination treatment is performed at a temperature of 250 °C to 750 °C;
(2) the calcination treatment is performed for a duration of 8h to 16h;
(3) the calcination treatment is performed under a protective atmosphere, optionally, the protective atmosphere comprises one or more of nitrogen gas, argon gas, helium gas and neon gas.

7. The method according to claim 3 or 4, wherein the suspension containing the coating substance is prepared by the steps comprising:
mixing the coating substance with an organic solvent to obtain the suspension containing the coating substance, optionally, a mass ratio of the coating element in the coating substance to the organic solvent is (6 to 12 ): 100.

8. The method according to claim 7, wherein the method satisfies at least one of following conditions:
(1) the coating substance comprises one or more oxygen-containing compounds of Ti, Mg, Al, Zr, Y, Mo, Nb and B;
(2) the organic solvent comprises one or more of alcohol and amide organic solvents, optionally, the organic solvent comprises one or more of ethanol, methanol and N,N-dimethylformamide.

9. A coating treatment system for cathode material, comprising:
a three-dimensional mixer, configured for preforming a spray and mixing treatment on a coating substance and a cathode material bulk, so that the coating substance is attached to a surface of the cathode material bulk;
a pyrolysis equipment, configured to be connected to the three-dimensional mixer and used to perform a calcination treatment on the product after the spray and mixing treatment, to form a nano-coating layer on the surface of the cathode material bulk.

10. The coating treatment system according to claim 9, wherein the coating treatment system satisfies at least one of following conditions:
(1) the three-dimensional mixer is provided with a spray channel along a central axis, and at least one spray outlet is provided on a wall of the spray channel;
(2) the pyrolysis equipment comprises a pyrolysis furnace or a pyrolysis kiln.

11. A secondary battery, comprising the coated cathode material according to claim 1 or 2, or the coated cathode material prepared by the method according to any one of claims 3 to 8, or the coated cathode material prepared by the coating treatment system according to claim 9 or 10.
